Europäisches Patentamt

European Patent Office

Office européen des brevets

(11) Veröffentlichungsnummer : **0 115 016**
**B1**

(12) **EUROPÄISCHE PATENTSCHRIFT**

(45) Veröffentlichungstag der Patentschrift :
30.07.86

(21) Anmeldenummer : 83112773.3

(22) Anmeldetag : 19.12.83

(51) Int. Cl.⁴ : **F 16 L 27/04, F 16 L 27/06,
F 01 N 7/18**

(54) Dichtungsanordnung zur gelenkigen Verbindung von zwei Rohrleitungen, insbesondere heissgehenden Abgasleitungen.

(30) Priorität : 28.12.82 DE 3248417

(43) Veröffentlichungstag der Anmeldung :
08.08.84 Patentblatt 84/32

(45) Bekanntmachung des Hinweises auf die Patenterteilung : 30.07.86 Patentblatt 86/31

(84) Benannte Vertragsstaaten :
AT BE CH FR GB IT LI NL SE

(56) Entgegenhaltungen :
DE-A- 2 845 949
DE-A- 2 912 347
DE-B- 2 856 450
FR-A- 2 490 778

(73) Patentinhaber : Feodor Burgmann Dichtungswerke GmbH & Co.
Äussere Sauerlacher Strasse 6-8
D-8190 Wolfratshausen 1 (DE)

(72) Erfinder : Bendl, Peter
Jordanstrasse 16
D-8190 Wolfratshausen (DE)

(74) Vertreter : Empl, Karl et al
Patentanwälte Dipl.-Ing. A. Wedde, Dipl.-Ing. K. Empl
Dipl.-Ing., Dipl.-Wirtsch.-Ing. K. Fehners Schumannstrasse 2
D-8000 München 80 (DE)

## Beschreibung

Die Erfindung betrifft eine Dichtungsanordnung zur gelenkigen Verbindung von zwei Rohrleitungen, insbesondere heißgehenden Abgasleitungen, bestehend aus einem am Ende der einen Rohrleitung befestigbaren ersten Flansch mit einer stirnseitigen, zur Leitungsachse koaxialen ersten metallischen Gleitfläche, einem am Ende der anderen Rohrleitung befestigbaren zweiten Flansch, welcher einen ringförmigen Teil mit einer dem ersten Flansch zugewandten, mindestens näherungsweise in einer Radialebene gelegenen Anlagefläche und einen über diese vorstehenden Rohrstutzen mit einer angenähert zylindrischen äußeren Umfangsfläche aufweist, einem den Rohrstutzen umgebenden und am zweiten Flansch betriebsmäßig unbeweglich gehaltenen, eine Füllmasse aus elastischem oder elastisch-plastischen Dichtungsmaterial enthaltenden Dichtungsring, an dem eine zweite metallische Gleitfläche ausgebildet ist, welche von der ersten Gleitfläche radial außen umfaßt ist und gleitverschiebbar an dieser anliegt, wobei mindestens eine der beiden Gleitflächen die Form einer sphärischen Ringfläche aufweist und einer die beiden Gleitflächen mit einer axialen Vorspannung in Berührung haltenden Einrichtung.

Bei einer bekannten Dichtungsanordnung dieser Art (DE-OS 29 12 347) weist der Dichtungsring eine aus einem Metalldrahtgewebe oder dergl. bestehende äußere Umhüllung auf, welche die erste metallische Gleitfläche bildet und die Füllmasse aus Mineralfasern oder dergl. umschließt. Dabei soll ein Teil der Drähte dieses Metalldrahtgeflechtes aus einem Metall mit Gleitlagereigenschaft bestehen oder mit einem solchen Metall beschichtet sein, um einer Geräuschentwicklung bei Relativbewegungen der beiden Flansche entgegenzuwirken.

Ferner ist es bekannt, die zweite Gleitfläche auf einen am zweiten Dichtungsflansch gehaltenen massiven Dichtungsring auszubilden, welcher auch eine Umhüllung aus plastischem Material aufweisen oder mit einem O-Ring an der Anlagefläche des zweiten Flansches anliegen kann.

Mit den bekannten Dichtungsanordnungen konnten bisher nicht alle Probleme hinsichtlich Dauerstandfestigkeit, Geräuschentwicklung bei relativen Schwenkbewegungen der beiden Rohrleitungen und permanenter Dichtigkeit gleichzeitig mit vertretbarem Kostenaufwand gelöst werden.

Aufgabe der Erfindung ist es, eine Dichtungsanordnung der eingangs genannten Art kostengünstig so weiterzubilden, daß eine langzeitige Verschleißbeständigkeit und Dichtigkeit, verbunden mit minimaler Geräuschentwicklung, insbesondere bei ihrem Einsatz in heißgehenden, gasführenden Rohrleitungen erreicht wird.

Diese Aufgabe wird dadurch gelöst, daß erfindungsgemäß der Dichtungsring einen im Querschnitt U-förmigen Blechring aufweist, an dessen äußeren Wandungsteil die zweite metallische Gleitfläche ausgebildet ist, dessen innerer Wandungsteil auf den Rohrstutzen aufgeschoben ist und dessen den inneren Wandungsteil mit dem äußeren Wandungsteil verbindender Wandungsteil dem ersten Flansch zugekehrt ist und daß die im Hohlraum des Blechringes enthaltene ringförmige Füllmasse über die freien Endkanten der inneren und äußeren Wandungsteile vorsteht und sich gegen die Anlagefläche abstützt.

Durch diese Ausgestaltung kann sich die am äußeren Wandungsteil des Blechringes ausgebildete zweite Gleitfläche der Form der ersten Gleitfläche elastisch anpassen, so daß eine gute Dichtwirkung auch dann gegeben ist, wenn sich die erste Gleitfläche insbesondere unter thermischen Einwirkungen verformt. Wegen dieser Anpassbarkeit der Gleitflächen können auch geringere Anforderungen an die Präzision ihrer Fertigung gestellt und damit deren Verbilligung erzielt werden. Der Blechring schützt die Füllmasse weitgehend vor einem Angriff durch das abzudichtende Medium, übernimmt die mechanische Reibungsbeanspruchung durch relative Schwenkbewegungen der beiden Flansche und sorgt ferner für eine erwünschte gute metallische Wärmeleitung zwischen den beiden Flanschen und damit im Falle des Einsatzes bei einer Brennkraftmaschine für eine gute Wärmeleitung zwischen Krümmer und Abgasrohr.

Die aus elastischem bzw. elastisch-plastischen Dichtungsmaterial bestehende Füllmasse des Blechringes erfüllt insofern eine mehrfache Funktion, als sie für eine wirksame Dämpfung von durch die relativen Schwenkbewegungen der beiden Flansche angeregten Schwingungen sorgt, den Blechring gegen die Anlagefläche am zweiten Flansch abdichtet und zusätzlich auch dem Blechring eine axiale Vorspannkraft und federnde Charakteristik erteilt. Aufgrund dieser Vorspannkraft in Verbindung mit der Eigenelastizität des Blechringes können an die Einrichtung für die axiale Vorspannung der beiden Gleitflächen geringere Anforderungen gestellt werden, wobei in bestimmten Fällen sogar auf die übliche Federanordnung verzichtet werden kann. Die Füllmasse setzt auch die über die Anlagefläche des Flansches eingebrachte axiale Vorspannkraft im radial nach innen und außen gerichtete Kräfte um, welche zu Verformungen der inneren und äußeren Wandungsteile des Blechringes führen, welche die Anlage seines inneren Wandungsteiles am Rohrstutzen und die Anschmiegung der zweiten an der ersten Gleitfläche und damit die Abdichtung verbessern.

Vorteilhaft ist die Endkante des inneren Wandungsteils des Blechringes gegenüber einer durch die Endkante des äußeren Wandungsteils gelegten Bezugsfläche zurückversetzt und steht die ringförmige Füllmasse über die Endkante des inneren Wandungsteils radial nach innen bis zur Umfangsfläche des Rohrstutzens vor. Hierdurch wird eine zusätzliche Abdichtung sowie eine Verbesserung der Geräuschdämmung erreicht, wobei auch geringere Anforderungen an die Toleranzen des Rohrstutzens am zweiten Flansch und des inneren Wandungsteils des Blechringes gestellt werden können.

Gemäß einer Ausbildungsform der Erfindung ist die zweite Gleitfläche komplementär zur konkav und sphärisch ausgebildeten ersten Gleitfläche geformt und liegt an dieser großflächig an. Gemäß einer abgeänderten Ausführungsform kann die zweite Gleitfläche auch an einem Ringwulst am äußeren Wandungsteil des Blechringes ausgebildet sein und in Linienberührung mit der konkav und sphärisch ausgebildeten ersten Gleitfläche stehen. Ferner kann die zweite Gleitfläche konkav und sphärisch ausgebildet sein und in Linienberührung mit der an einem Ringwulst ausgebildeten ersten Gleitfläche stehen.

Der äußere Wandungsteil des Blechringes kann außerhalb desjenigen Bereiches seiner Gleitfläche, den betriebsmäßig die erste Gleitfläche überstreicht, (im Falle seiner sphärischen Ausbildung auch dieses Bereichs seiner Gleitfläche) eine Mehrzahl von Aussparungen aufweisen. Diese haben vorzugsweise innerhalb des vorerwähnten Bereiches der Gleitfläche die Form von in Umfangsrichtung sich erstreckenden Schlitze in mehrreihiger, sich überdeckender Anordnung, während die außerhalb dieses Bereiches der Gleitfläche befindlichen Aussparungen vorzugsweise in Radialebene gelegene Schlitze sind. Durch diese Schlitze ist eine weitere Verringerung der Geräuschentwicklung erzielbar, wobei einerseits in dieser Hinsicht die ringförmige Füllmasse aus elastischem bzw. elastisch-plastischem Dichtungsmaterial besser zur Wirksamkeit gebracht wird und andererseits eine Änderung der Eigenfrequenz des Blechringes in eine weniger störende Tonlage möglich ist. Zusätzlich können Ablagerungen an den Gleitflächen wirksamer beseitigt werden. Zweckmäßig steht die Füllmasse in diese Aussparungen ein.

Die Erfindung wird im folgenden anhand von Ausführungsbeispielen näher erläutert. In der Zeichnung zeigt :

Figur 1 einen Längs-Teilschnitt einer ersten Dichtungsanordnung mit großflächiger Anlage der jeweils sphärischen ersten und zweiten Gleitfläche ;

Figur 2 einen vergrößerten Längs-Teilschnitt des in der Dichtungsanordnung nach Fig. 1 enthaltenen Blechringes ;

Figur 3 eine vergrößerte Ansicht eines in der Dichtungsanordnung nach Fig. 1 einsetzbaren geänderten Blechringes mit Aussparungen ;

Figur 4 einen Längs-Teilschnitt einer zweiten Dichtungsanordnung mit Linienberührung der ersten Gleitfläche an der sphärischen zweiten Gleitfläche und

Figur 5 eine vergrößerte Ansicht eines alternativ in der Ausführungsform gemäß Fig. 4 einsetzbaren Blechringes mit Aussparungen.

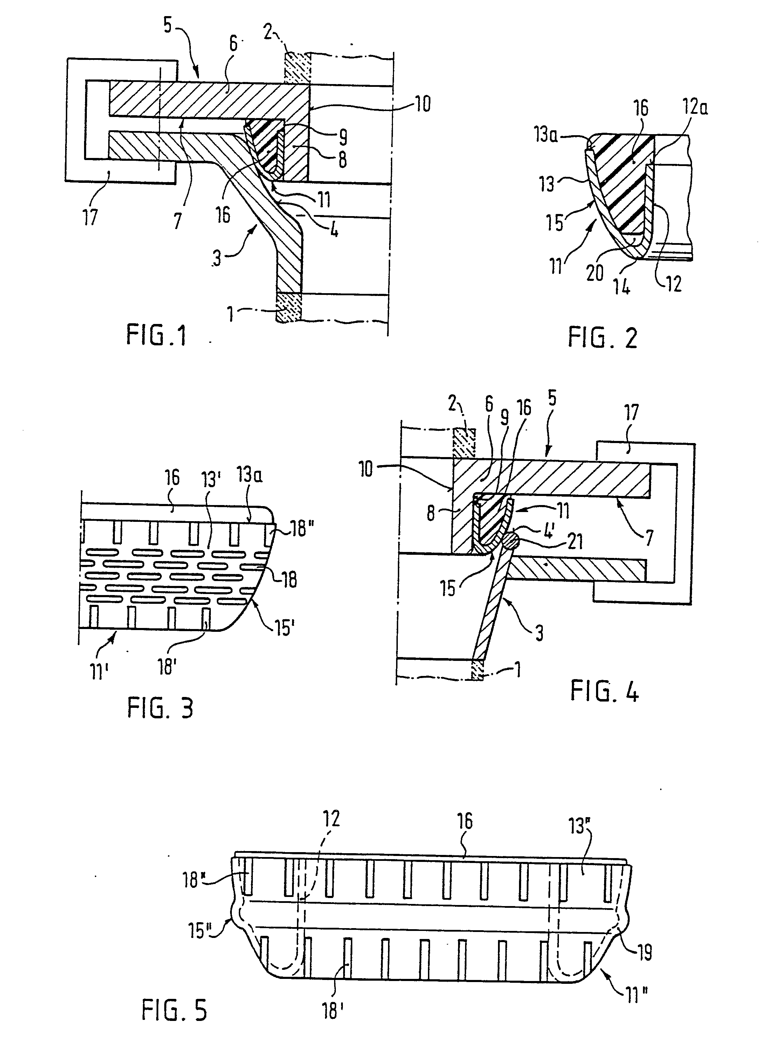

In der in den Fig. 1 und 2 veranschaulichten ersten Ausführungsform sind die durch die Dichtungsanordnung zu verbindenden Rohrleitungen 1, 2 durch strichpunktierte Linien angedeutet. Die eine Rohrleitung 1 ist, beispielsweise durch Schweißung, mit einem ersten Flansch 3 verbunden, welcher eine zur Achse der Rohrleitung 1 koaxiale metallische erste Gleitfläche 4 aufweist, und zwar in Form einer konkaven sphärischen Ringfläche.

An der anderen Rohrleitung 2 ist, ebenfalls beispielsweise durch Schweißung, ein zweiter Flansch 5 befestigt. Dieser besteht aus einem ringförmigen Teil 6 mit einer in einer Radialebene gelegenen Anlagefläche 7 und einem über diese vorstehenden Rohrstutzen 8 mit einer zylindrischen äußeren Umfangsfläche 9 und einer an die Rohrleitung 2 angepaßten Bohrung 10. Auf den Rohrstutzen 8 ist ein im Querschnitt U-förmiger Blechring 11 aufgeschoben (Fig. 2). Dieser besteht aus einem rohrförmigen inneren Wandungsteil 12, einem sphärisch gewölbten äußeren Wandungsteil 13 und einem diese beiden Wandungsteile einstückig verbindenden Wandungsteil 14, der annähernd die Gestalt eines halben Kreishohlringes aufweist.

Bezogen auf die Axialrichtung, steht die Endkante 13a des äußeren Wandungsteils 13 über die Endkante 12a des inneren Wandungsteils 12 vor. Am Außenumfang des äußeren Wandungsteil 13 ist eine zweite Gleitfläche 15 komplementär zur ersten Gleitfläche 4 ausgeformt, dergestalt, daß die beiden metallischen Gleitflächen flächenhaft aneinander liegen.

Der Hohlraum des Blechringes 11 ist mit einer ringförmigen Füllmasse 16 ausgefüllt, welche aus einem elastischen oder elastisch-plastischen Dichtungsmaterial besteht, wobei jedoch für einige Anwendungsfälle auch ein an den verbindenden Wandungsteil 14 anschließender ringförmiger Leerraum 20 verbleiben kann. Anstelle des Leerraumes 20 kann in diesem Bereich auch eine ringförmige Füllmasse mit gegenüber der Füllmasse 16 anderen Materialeigenschaften vorgesehen sein. Beispielsweise mit besonders hoher Elastizität, wobei andererseits Dichtungseigenschaften in den Hintergrund treten können, wenn der Blechring in diesem Bereich keine Aussparungen aufweist (wie sie im folgenden für andere Ausführungsbeispiele erläutert sind). Die Füllmasse 16 steht über beide Endkanten 12a, 13a vor und erstreckt sich zumindestens in betriebsmäßig eingebautem Zustand auch über die Endkante 12a radial nach innen bis zur äußeren Umfangsfläche 9 des Rohrstutzens 8.

Die beiden Flansche 3, 5 sind von einer nur symbolisch veranschaulichten, mit 17 bezeichneten Einrichtung unter Ausübung einer axialen Kraft zusammengehalten. Diese Einrichtung 17 kann, abhängig von den Federungseigenschaften der Füllmasse 16, aus üblichen Flanschenschrauben bestehen, soll aber zweckmäßigerweise Federungseigenschaften aufweisen, um unter allen Betriebsbedingungen eine zuverlässige Abdichtung zu gewährleisten.

Die in den nachstehend beschriebenen und in Fig. 3-5 veranschaulichten weiteren Ausführungsformen verwendeten gleichwirkenden bzw. gleichgestalteten Bauteile sind mit übereinstimmenden Bezugszeichen versehen und für ihre Erläuterung wird auf die vorstehenden Ausführungen verwiesen.

Eine zweite Ausführungsform ergibt sich durch Austausch des in Fig. 1 enthaltenen vollwandigen (nicht perforierten) Blechringes 11 durch einen in Fig. 3 dargestellten Blechring 11' mit konvexer, sphärischer zweiter Gleitfläche 15' am äußeren Wandungsteil 13', welche komplementär zu der konkaven sphärischen ersten Gleitfläche 4 geformt ist, aber in denjenigem Bereich dieser Gleitfläche 15', der betriebsmäßig von der Gleitfläche 4 überstrichen wird, eine Mehrzahl von schlitzförmigen Aussparungen (Perforationen) 18 aufweist. Hierbei ist eine mehrreihige Anordnung vorgesehen, wobei die Längsrichtung der Aussparungen 18 in Umfangsrichtung des Blechringes 11' verläuft und die Aussparungen aufeinanderfolgender Reihen versetzt zueinander angeordnet sind. Weiterhin sind außerhalb des vorerwähnten Bereiches der zweiten Gleitfläche 15' zusätzliche Aussparungen (Perforationen) 18', 18'' vorgesehen, die schlitzförmig gestaltet sind und mit ihren Längsachsen in Radialebenen des Blechringes 11' liegen. Die den Endkanten 13a benachbarten Aussparungen 18'' sind zu diesen Endkanten offen, so daß insoweit eine gefiederte Ausbildung des äußeren Wandungsteils 13' vorliegt. Die ringförmige Füllmasse 16 erstreckt sich bis in die Aussparungen 18, 18', 18'' hinein.

Eine dritte Ausführungsform ergibt sich, wenn ein gemäß Fig. 2 ausgebildeter vollwandiger (nicht perforierter) Blechring 11 mit konvexer sphärischer zweiter Gleitfläche 15 eingesetzt wird, der an einer zu dieser nicht komplementär geformten ersten Gleitfläche 4' anliegt, welche gemäß Fig. 4 an einem Ringwulst 21 ausgebildet ist. Es tritt daher zwischen den Gleitflächen 4', 15 im wesentlichen nur Linienberührung auf. In einer Abänderung können außerhalb des betriebsmäßig von der Gleitfläche 4' überstrichenen Bereichs der Gleitfläche 15 des Blechringes 11 auch Aussparungen vorgesehen werden, wie sie mit 18', 18'' in Fig. 3 dargestellt sind, jedoch ohne die hier gezeigten Aussparungen 18.

Eine vierte Ausführungsform, ebenfalls mit Linienberührung, ergibt sich durch Einsatz eines Blechringes 11'' (vergleiche Fig. 5) in einer im übrigen gemäß Fig. 1 ausgebildeten Anordnung. Bei diesem Blechring 11'' ist die (zweite) Gleitfläche 15'' an einem Ringwults 19 des äußeren Wandungsteiles 13'' ausgebildet, wobei auch Aussparungen 18', 18'' wie für Fig. 3 beschrieben, vorgesehen sein können.

## Patentansprüche

1. Dichtungsanordnung zur gelenkigen Verbindung von zwei Rohrleitungen, insbesondere heißgehenden Abgasleitungen, bestehend aus einem am Ende der einen Rohrleitung befestigbaren ersten Flansch (3), mit einer stirnseitigen, zur Leitungsachse koaxialen ersten metallischen Gleitfläche (4), einem am Ende der anderen Rohrleitung befestigbaren zweiten Flansch (5), welcher einen ringförmigen Teil mit einer dem ersten Flansch zugewandten, mindestens näherungsweise in einer Radialebene gelegenen Anlagefläche (7) und einen über diese vorstehenden Rohrstutzen mit einer angenähert zylindrischen äußeren Umfangsfläche (9) aufweist, einem den Rohrstutzen umgebenden und am zweiten Flansch betriebsmäßig unbeweglich gehaltenen, eine Füllmasse (16) aus elastischem oder elastisch-plastischen Dichtungsmaterial enthaltenden Dichtungsring, an dem eine zweite metallische Gleitfläche (15, 15') ausgebildet ist, welche von der ersten Gleitfläche radial außen umfaßt ist und gleitverschiebbar an dieser anliegt, wobei mindestens eine der beiden Gleitflächen die Form einer sphärischen Ringfläche aufweist und eine die beiden Gleitflächen mit einer axialen Vorspannung in Berührung haltenden Einrichtung, dadurch gekennzeichnet, daß der Dichtungsring einen im Querschnitt U-förmigen Blechring (11, 11', 11'') aufweist, an dessen äußeren Wandungsteil (13, 13', 13'') die zweite metallische Gleitfläche (15, 15') ausgebildet ist, dessen innerer Wandungsteil (12) auf den Rohrstutzen (8) aufgeschoben ist und dessen den inneren Wandungsteil (12) mit dem äußeren Wandungste (13, 13', 13'') verbindender Wandungsteil (14) dem ersten Flansch (3) zugekehrt ist und daß die im Hohlraum des Blechringes (11, 11', 11'') enthaltene ringförmige Füllmasse (16) über die freien Endkanten (12a, 13a) der inneren und äußeren Wandungsteile (12; 13, 13', 13'') vorsteht und sich gegen die Anlagefläche (7) abstützt.

2. Dichtungsanordnung nach Anspruch 1, dadurch gekennzeichnet, daß die Endkante (12a) des inneren Wandungsteils (12) des Blechringes (11, 11', 11'') gegenüber einer durch die Endkante (13a) des äußeren Wandungsteils (13, 13', 13'') gelegten Bezugsfläche zurückversetzt ist und daß die ringförmige Füllmasse (16) mindestens im betriebsmäßigen Zustand über die Endkante (12a) des inneren Wandungsteils (12) radial nach innen bis zur Umfangsfläche (9) des Rohrstutzens (8) vorsteht.

3. Dichtungsanordnung nach Anspruch 1 oder 2, dadurch gekennzeichnet, daß die zweite Gleitfläche (15) komplementär zur konkav und sphärisch ausgebildeten ersten Gleitfläche (4) geformt ist und an dieser großflächig anliegt.

4. Dichtungsanordnung nach Anspruch 1 oder 2, dadurch gekennzeichnet, daß die zweite Gleitfläche (15') an einem Ringwulst (19) am äußeren Wandungsteil (13) des Blechringes (11'') ausgebildet ist und in Linienberührung mit der konkav und sphärisch ausgebildeten ersten Gleitfläche (4) steht.

5. Dichtungsanordnung nach Anspruch 1 oder 2, dadurch gekennzeichnet, daß die zweite Gleitfläche (15) konvex und sphärisch ausgebildet ist und in Linienberührung mit der an einem Ringwulst (21) ausgebildeten ersten Gleitfläche (4') steht.

6. Dichtungsanordnung nach Anspruch 1, dadurch gekennzeichnet, daß der äußere Wandungsteil (13, 13', 13'') des Blechringes (11', 11'') eine Mehrzahl von Aussparungen (18', 18'') außerhalb desjenigen Bereiches seiner Gleitfläche (15, 15') aufweist, den betriebsmäßig die erste Gleitfläche (4, 4') überstreicht.

7. Dichtungsanordnung nach Anspruch 1, dadurch gekennzeichnet, daß der äußere Wandungsteil (13) des Blechringes (11') eine Mehrzahl von Aussparungen (18) in denjenigem Bereich seiner sphärisch ausgebildeten Gleitfläche (15') aufweist, den betriebsmäßig die erste Gleitfläche (4) überstreicht.

8. Dichtungsanordnung nach Anspruch 6 und/oder 7, dadurch gekennzeichnet, daß die Füllmasse (16) in die Aussparungen (18, 18', 18'') einsteht.

9. Dichtungsanordnung nach Anspruch 1 oder 8, dadurch gekennzeichnet, daß die Füllmasse (16) den Hohlraum des Blechringes (11, 11', 11'') unter Belassung eines ringförmigen, den verbindenden Wandungsteil (14) benachbarten Leerraumes (20) ausfüllt.

10. Dichtungsanordnung nach Anspruch 1 oder 9, dadurch gekennzeichnet, daß die Füllmasse (16) aus einem vorgeformten Ring gebildet ist.

11. Dichtungsanordnung nach Anspruch 1, dadurch gekennzeichnet, daß die Füllmasse (16) aus Graphit und/oder mineralischen Werkstoffen besteht.

12. Dichtungsanordnung nach Anspruch 1, dadurch gekennzeichnet, daß die Füllmasse (16) aus einem Geflecht, Filz oder dergleichen aus metallischen und/oder nichtmetallischen Fasern besteht.

## Claims

1. A seal assembly for providing an articulated connection of two pipes, particularly hot exhaust gas pipes, comprising a first flange (3) being adapted for affixation to the end of one pipe and being provided with a first metallic slide face (4) frontal on said first flange and in coaxial relationship to the pipe axis, a second flange (5) being adapted for affixation to the end of the other pipe and having an annular part including an engagement face (7) being oriented towards said first flange and situated at least approximately in a radial plane and having a tubular nipple projecting from said engagement face and having an at least approximately cylindrical outer circumferential surface (9) a sealing ring surrounding said tubular nipple and being held operationally stationarily on the second flange and including a filler mass (16) made from an elastic or elastic-plastic sealing material, on which sealing ring being formed a second metallic slide face (15, 15') radially outwardly surrounded by the first slide face and being in a sliding contact with the first slide face, at least one of the two slide faces has the shape of a spherical annular surface and further comprising a device which maintains the two slide faces in contact with one another with an axial bias, characterised in that the sealing ring comprises a sheet metal ring (11, 11', 11'') having a U-shaped cross section, the outer wall portion (13, 13', 13'') of said sheet metal ring being provided with the second metallic slide face (15, 15') the inner wall portion (12) of the sheet metal ring being sliped on the tubular nipple (8) and the wall portion (14) conneting the inner wall portion (12) and the outer wall portion (13, 13', 13'') of the sheet metal ring is oriented towards the first flange (13) and characterised in that the annular filler mass received in the cavity extends beyond the terminal edges (12a, 13a) and being in support contact with said engagement face (7).

2. A seal assembly according to Claim 1, characterised in that the terminal edge (12a) of the inner wall portion (12) of the sheet metal ring (11, 11', 11'') is recessed with respect to a reference plane contacting the terminal edge (13a) of the outer wall portion (13, 13', 13'') and further characterised in that the annular filler mass (16) extends at least in an operational condition radially inwardly beyond the terminal edge (12a) of the inner wall portion (12) to the outer circumferential surface (9) of the tubular nipple (8).

3. A seal assembly according to Claim 1, characterised in that the second slide face (15) is complemental formed with respect to the concave-spherical formed first slide face (4) and being in a large area surface-to-surface engagement therewith.

4. A seal assembly according to Claim 1 or 2, characterised in that second slide face (15') is formed on a circumferential bead (19) of outer wall portion (13) of the sheet metal ring (11''), the second slide face being in a linear contact with the concave-spherical shaped first slide face (4).

5. A seal assembly according to Claim 1 or 2, characterised in that the second slide face (15) has a convex and spherical configuration and in that the second slide face is in a linear contact with the first slide face (4'), which is formed on a circumferential bead (21).

6. A seal assembly according to Claim 1, characterised in that the outer wall portion (13, 13', 13'') of the sheet metal ring (11', 11'') has a plurality of perforations (18', 18'') externally of a zone of its slide face (15, 13') which zone is overlapped during operation by the first slide face (4, 4').

7. A seal assembly according to Claim 1, characterised in that the outer wall portion (13) of the sheet metal ring (11') has a plurality of perforations (18) within a zone of its spherically formed slide face (15'), which zone is overlapped during operation by the first slide face (4).

8. A seal assembly according to Claim 6 and/or 7, characterised in that the filler mass (16) project into the perforations (18, 18', 18'').

9. A seal assembly according to Claim 1 or 8, characterised in that the filler mass (16) fills up the cavity of the sheet metall ring (11, 11', 11") letting free an empty annular space being situated adjacent the connecting wall portion (14).

10. A seal assembly according to Claim 1 or 9, characterised in that the filler mass (16) is a preformed ring.

11. A seal assembly according to Claim 1, characterised in that the filler mass (16) consists of graphite and/or mineral materials.

12. A seal assembly according to Claim 1, characterised in that the filler mass (16) is a mesh or felt or a similar product of metal fibers and/or of non-metallic fibers.

**Revendications**

1. Garniture d'étanchéité en matière plastique pour le raccordement articulé entre deux tuyauteries, en particulier des tuyauteries d'évacuation de gaz chauds, constituée par une première bride (3) pouvant être fixée à l'extrémité de l'une des tuyauteries comportant, du côté frontal, une première face métallique lisse (4) coaxiale à l'axe de la tuyauterie, une deuxième bride (5) pouvant être fixée à l'extrémité de l'autre tuyauterie qui présente une section de forme annulaire comportant une face d'application (7) orientée vers la première bride et située au moins approximativement dans un plan radial et un raccord tubulaire faisant saillie de cette surface d'application et comportant une face périphérique (9) approximativement cylindrique, un joint en forme de bague entourant le raccord tubulaire, maintenant la deuxième bride immobile pendant le service et contenant une masse (16) constituée en une matière étanche élastique ou élasticoplastique, joint sur lequel est conformée une deuxième masse métallique lisse (15, 15') qui est entourée radialement de l'extérieure par la première face lisse et qui s'applique sur celle-ci de manière à pouvoir coulisser, tandis que l'une des deux faces lisses présente la forme d'une face annulaire sphérique ainsi qu'un dispositif qui maintient les deux faces lisses en contact pour le serrage initial dans le sens axial, caractérisée par le fait que le joint en forme de bague présente une rondelle en tôle (11, 11', 11") de section en forme de U sur la paroi externe de laquelle (13, 13', 13") est conformée la deuxième face métallique lisse (15, 15'), dont la paroi interne (12) a été glissée sur le raccord tubulaire (8) et dont la paroi (14) qui relie la paroi interne (12) à la paroi externe (13, 13', 13") est orientée vers la première bride (3) et par le fait que la masse (16) de forme annulaire contenue à l'intérieur de l'espace creux de la rondelle de tôle (11, 11', 11") fait saillie au-delà des arêtes terminales libres (12a, 13a) des parois internes et externes (12, 13, 13', 13") et s'appuie contre la surface d'application (7).

2. Garniture d'étanchéité selon la revendication 1, caractérisée par le fait que l'arête terminale (12a) de la paroi interne (12) de la rondelle de tôle (11, 11', 11") est décalée vers l'arrière par rapport à la surface de référence définie par l'arête terminale (13a) de la paroi interne (13, 13', 13") et par le fait que la masse de forme annulaire (16) fait saillie, du moins en fonctionnement, au-delà de l'arête terminale (12a) de la paroi interne (12) radialement vers l'intérieur jusqu'à atteindre la face périphérique (9) du raccord tubulaire (8).

3. Garniture d'étanchéité selon la revendication 1 ou 2, caractérisée par le fait que la deuxième surface lisse (15) présente une forme complémentaire à celle concave et sphérique de la première face lisse (4) et qu'elle vient s'appliquer sur cette dernière.

4. Garniture d'étanchéité selon la revendication 1 ou 2, caractérisée par le fait que la deuxième surface lisse (15') est réalisée sur un bourrelet annulaire (19) se trouvant sur la paroi externe (13) de la rondelle de tôle (11') et qu'elle est en contact linéaire avec la première surface lisse (4) de forme concave et sphérique.

5. Garniture d'étanchéité selon la revendication 1 ou 2, caractérisée par le fait que la deuxième surface lisse (15) a une forme convexe et sphérique et qu'elle est en contact linéaire avec une première surface lisse (4') réalisée sur un bourrelet annulaire (21).

6. Garniture d'étanchéité selon la revendication 1, caractérisée par le fait que la paroi externe (13, 13', 13") de la rondelle de tôle (11', 11") présente plusieurs évidements (18', 18") situés à l'extérieur de la zone de sa surface lisse (15, 15') sur laquelle passe la première face lisse (4, 4') en fonctionnement.

7. Garniture d'étanchéité selon la revendication 1, caractérisée par le fait que la paroi externe (13) de la rondelle de tôle (11') présente plusieurs évidements (18) dans la zone de sa face lisse (15') de forme sphérique sur laquelle passe la première face lisse (4) en fonctionnement.

8. Garniture d'étanchéité selon les revendications 6 et/ou 7, caractérisé par le fait que la masse (16) pénètre dans les évidements (18, 18', 18").

9. Garniture d'étanchéité selon la revendication 1 ou 8, caractérisée par le fait que la masse (16) remplit entièrement l'espace creux de la rondelle de tôle (11, 11', 11") en laissant libre un espace vide (20) de forme annulaire placé au voisinage de la paroi de liaison (14).

10. Garniture d'étanchéité selon la revendication 1 ou 9, caractérisée par le fait que la masse (16) est constituée par une bague pré-moulée.

11. Garniture d'étanchéité selon la revendication 1, caractérisée par le fait que la masse (16) est constituée en graphite et/ou en matières minérales.

12. Garniture d'étanchéité selon la revendication 1, caractérisée par le fait que la masse (16) est constituée par un tissu, un feutre ou analogue en fibres métalliques et/ou non métalliques.

0 115 016

FIG.1

FIG. 2

FIG. 3

FIG. 4

FIG. 5